Europäisches Patentamt

European Patent Office

Office européen des brevets

(19)

(11) Publication number: **0 247 219 B1**

## EUROPEAN PATENT SPECIFICATION

(12)

(45) Date of publication of patent specification: 15.05.91

(51) Int. Cl.5: **G11B 9/00**, G11B 9/08, G11B 19/20, G11B 25/04, //G11B21/00

(21) Application number: 86107188.4

(22) Date of filing: 27.05.86

(54) Direct access storage unit.

(43) Date of publication of application:
02.12.87 Bulletin 87/49

(45) Publication of the grant of the patent:
15.05.91 Bulletin 91/20

(84) Designated Contracting States:
CH DE FR GB IT LI NL SE

(56) References cited:
EP-A- 0 174 860        DE-A- 1 488 698
DE-B- 1 108 954       US-A- 2 916 559
US-A- 3 102 203       US-A- 3 506 971
US-A- 3 872 445       US-A- 4 032 901
US-A- 4 575 822

PATENTS ABSTRACTS OF JAPAN, vol. 7, no.
26 (P-172)[1171], 2nd February 1983; & JP-
A-57 181 445 (TOKYO SHIBAURA DENKI K.K.)
08-11-1982

PATENTS ABSTRACTS OF JAPAN, vol. 6, no.
195 (P-146)[1073], 5th October 1982; & JP-
A-57 105 834 (TOKYO SHIBAURA DENKI K.K.)
01-07-1982

PATENTS ABSTRACTS OF JAPAN, vol. 9, no.
106 (E-313)[1829], 10th May 1985; & JP-A-59
230 472 (HITACHI SEISAKUSHO K.K.)
25-12-1984

(73) Proprietor: **International Business Machines
Corporation
Old Orchard Road
Armonk, N.Y. 10504(US)**

(72) Inventor: **Pohl, Wolfgang Dieter
Felsenhofstrasse 10
CH-8134 Adliswil(CH)**
Inventor: **Duerig, Urs Theodor
Nidelbadstrasse 15
CH-8803 Rüschlikon(CH)**
Inventor: **Gimzewski, James Kazimierz
Milchbuckstrasse 1
CH-8057 Zürich(CH)**

(74) Representative: **Rudack, Günter O., Dipl.-Ing.
IBM Corporation Säumerstrasse 4
CH-8803 Rüschlikon(CH)**

**Description**

This invention relates to direct access storage and in particular to a direct access storage unit providing for a storage capacity in the order of tens of gigabits, and employing a read/write "head" that cooperates with a storage medium while there is a mutual displacement between them.

Present-day direct access storage of the "moving" type usually employs magnetic disk storage techniques where a magnetizable recording medium is displaced with respect to an essentially stationary magnetic transducer. The transducer, or magnetic head, typically comprises a magnetizable core providing a path for the magnetic flux generated by currents flowing in a coil wound on said core and creating a magnetic field across the core's cap. The gap is facing the surface of the recording medium at a preferably very small but constant distance. As the magnetic field varies, these variations are "written" into the recording medium. Conversely, for "reading", as magnetic transitions stored on the recording medium travel past the pole tips at the gap of the magnetic core, flux is induced in the windings of the coil and can be read out by suitable electronic circuitry.

Obviously, one would like to store as much information as possible in a given volume of storage. Assuming that the recording medium would permit any desired density of stored information, it is the finite size of the write/read transducer, in particular the width of its gap, and its distance from the recording surface that appears as the main limiting factors. One commercially available direct access storage unit has an areal density of about 1,2 million bits per square centimeter which is the equivalent of a storage area of 80 $\mu m^2$ per bit. This density is achieved with a gap of about 1 $\mu m$ width and a flying height of the transducer over the recording surface of less than 250 nm. Traditionally, the transducers used with this type of storage are designed for riding on a pressurized air bearing which is established automatically as the recording medium rotates (cf. "Disk Storage Technology", International Business Machines Corporation, 1980, GA 26-1665-0).

A great step forward in the direction of reducing the transducer/recording medium distance is disclosed in EP-A-0227845 where the flying height is controlled by a feedback loop arrangement which uses the tunneling current flowing across the gap between transducer and recording medium. This permits the gap to be as small as several tens of nanometers and, accordingly, an increase in storage density at least by a factor of 10 with respect to those storage units relying on air bearing for the transducer flying height regulation.

As mentioned before, the recording density is, besides signal amplitude, domain size and other factors, dependent on the size of the transducer, namely the size of the gap of the magnetic head. The already small gap width of 1 $\mu m$ is achieved with a thin film head. Photolithographic techniques offer the possibility of controlling the dimensions of the head down to a few percent and permit winding placement with micrometer accuracy. Yet, the gap width of 1 $\mu m$ can hardly be reduced with conventional techniques. It is, therefore, necessary to look for alternative solutions allowing for a further reduction of the bit size.

The present invention offers such an alternative in that it proposes to use a different storage concept, with a different storage medium, and a different transducer head, as opposed to conventional magnetic recording. Specifically, the present invention dwells on phenomena associated with metal-vacuum-metal (MVM) tunneling which has been explored extensively in context with the Scanning Tunneling Microscope (cf. Binnig et al., Appl.Phys. Lett. 40 (1982), p. 178). It is not limited to tunneling phenomena but could also be used with other techniques allowing for sufficient control of transducer position and flying height.

US-A-4 575 822 discloses a digital data storage unit in which the variations of the tunneling current are measured by a probe arranged above the record medium for readout. The variations are a consequence of perturbations of various kinds, such as electric or magnetic manifestations or physical disruptions, for example, to which the record medium has previously been exposed. As common in tunneling current applications, a pointed tip is used to define the tunneling region. Mutual displacement between probe and record medium in xyz-directions is achieved by a conventional tripod.

A direct access storage unit employing the tunneling phenomena is disclosed in US-A-4 575 822, where the information is stored in the form of patterns of atoms adsorbed on the surface of a storage medium. A tip is maintained at tunneling distance from the storage medium to remove individual atoms from the medium for writing, and to detect variations of the funneling current caused by the presence or absence of atoms in scanned locations for reading. A conventional xy-drive is used to provide for mutual scanning displacement between the record medium and the funneling tip.

Motion control in xy-directions, and rotation, of the storage medium in connection with a system for storing and retrieving information at the molecular level, is known from US-A-4 032 901. This system operates with comparatively large-diameter, high-energy electron beams for recording and readout, the storage medium comprising molecules in the 100 nm diameter range as storage cells.

None of the known references discloses or suggests the particular way in which, in accordance with the present invention, the storage medium is arranged with respect to the "head", or the structure of this "head", and the way it is operating.

The storage concept of the present invention is derived from the conventional "moving" disk storage where the storage medium for writing or reading or erasing the information is displaced with respect to the transducer in order to permit the addressing of all individual storage locations on the storage medium. While on conventional storage disks the storage locations are arranged on concentric circles about a single common center, on the storage medium of the present invention, however, the storage locations are arranged in groups, with all members of any one group being arranged on concentrical circles about the group's own center, with all centers being arranged in an ordered array on one surface of the storage medium. The concentrical circles of storage locations of each group form a "microdisk" with a diameter of less than 0,1 mm. Even with several hundred "microdisks" per storage surface, the area required under this concept is much smaller than in conventional storage devices.

The transducer is conceived as an array of tunnel tips each associated with one microdisk. The storage medium comprises a material which is sensitive to the tunnel current.

While the present invention is not directed to the storage medium per se, it seems in order to briefly introduce a storage medium capable of recording variations of the tunneling current. This storage medium consists of a thin layer of silicon dioxide on top of a silicon substrate. The oxide is prepared to have a plurality of trapping sites of about 2.4 eV depth. Electrons emitted from a tunnel tip can be stably trapped at such sites at room temperature. (Cf. D.J. Dimaria in Pantelides (Ed.) "The Physics of $SiO_2$ and its Interfaces", Pergamon 1978, p. 160 ff.) This mechanism qualifies for write/read applications.

Alternatively, for READ-ONLY memories, the modification of the surface of the storage medium may involve chemical changes attributable to carbonization of hydrocarbons adsorbed on the surface. Chemically modified storage locations have a workfunction different from their environment, and this can be detected by observation of the tunneling current/distance characteristics as described by Binnig et al. in Physica 127b (1984), p. 37.

The new storage concept and the new design of the transducer require a novel mechanism for the mutual displacement of transducer and storage medium. A preferred embodiment of this invention employs piezoelectric elements for producing a circular motion at very high speed, thus doing away with the electromotors used in conventional moving storage apparatus.

It is, accordingly, an object of the present invention to propose a direct access storage unit having a dramatically increased storage capacity, yet which is smaller in physical size when compared to conventional direct access storage apparatus.

It is a further object of this invention to provide a storage unit having a higher bit rate with respect to prior art storage devices and, accordingly, a shorter access time.

It is a still further object of this invention to propose a direct access storage unit which does not require rotating parts, like electromotors, etc., to generate mutual displacement between storage medium and transducer.

The present invention achieves the objects stated above with a direct access storage unit comprising a storage medium, at least one tunneling current detector including a pointed tip facing said storage medium and being attached to a cantilever beam, allowing the mutual distance between said tip and the surface of said storage medium to be adjustable in the nanometer range, the writing and/or reading of digital information into, or out of the storage medium being performed by means of variation of the tunneling current flowing across the gap between said tip and the surface of said storage medium, and means for generating a mutual displacement between said storage medium and said tunneling current detector. The direct access storage unit of the invention is characterized in that said storage medium is attached to the free end of an elongate, two-diffensional positioning device which is rigidly anchored at its other end, and which comprises at least one piezoelectric bender element carrying several pairs of electrodes on orthogonal areas of the surface of said bender element, and electronic control circuitry for energizing said electrodes in such a fashion that the free end of the bender element performs a circular motion to enable each tunnel tip to scan its associated storage area along the periphery of a circle.

Details of a preferred embodiment of the invention will hereafter be described by way of example, with reference to the attached drawings in which:

Fig. 1     is a perspective view of the storage medium supported on a piezoceramic bender;

Fig. 2     is a cross-section of the piezoceramic bender; of Fig. 1;

Fig.3     is a schematic illustration of the circular movement one end of the piezoceramic bender performs in operation;

Fig. 4     is a top plan view of part of the transducer array;

Fig. 5      is a more detailed to plan view of a part of the transducer array of Fig. 4;

Fig. 6      is a cross-section along line A-A of Fig. 5;

Fig. 7      is a schematic illustration of the mutual arrangement of the storage medium with respect to the transducer array;

Fig. 8      is a cross-section of a preferred arrangement for holding the transducer array and for supporting the piezoceramic bender, serving as a coarse-approach unit.

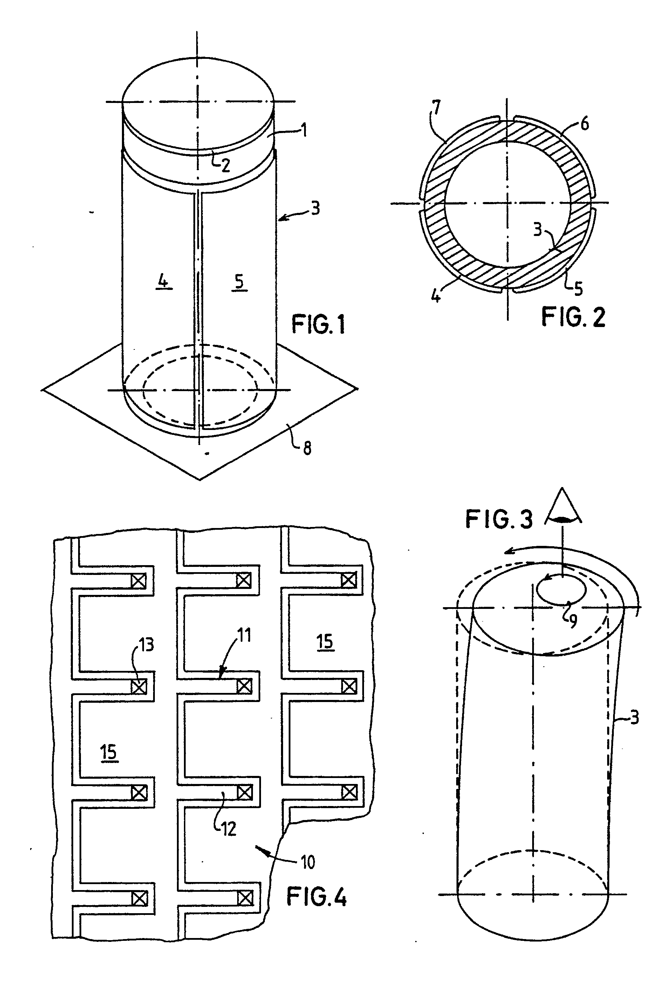

Referring to Fig. 1 there is shown a preferred embodiment of the invention comprising a substrate 1 which may consist of a silicon chip of about 3 mm diameter covered with a thin layer of silicon dioxide. Oxide layer 2 may have a thickness of about two or three nanometers. Its surface is finished to be almost atomically flat over areas of 100 × 100 $\mu m^2$. Such a degree of perfection can be achieved with polishing techniques. Also, epitactically grown semiconductor surfaces or cleaved crystals might be used.

Substrate 1 is attached to a piezoceramic tube 3 carrying electrodes 4 through 7 (Fig. 2) on its outer surface in such a way that the tube, with one end fixed in a frame 8, can be caused to bend sideways from its longitudinal axis by applying opposite potentials to electrodes located on diametrically opposite regions of the tube's cylindrical surface.

The free end of tube 3, i.e. the end carrying substrate 1, can be forced to perform a circular motion by applying sinusoidal voltages to electrodes 4 through 7, with the voltages applied to electrodes 4 and 6 having their phase shifted by 90° with respect to the phase of the voltages applied to electrodes 5 and 7. Thus, for a stationary observer, each point on the surface of the oxide layer 2 travels along a circular path, in the perspective view of Fig. 3 seen as an ellipse. A large radius of circulation is obtained by exciting tube 3 at its bending resonance frequency.

The product of radius and resonance frequency represents a figure of merit for a piezoelectric tube. It depends on materials constants, viz. piezoelectric coefficient, elastic modulus, density, a quality factor, a shape factor, and on the applied electric field. A commercially available piezoceramic tube of about 6 mm outer diameter and about 0,4 mm wall thickness, when excited with 20 V a.c. will circulate at a frequency of 5 kHz, with a radius of circulation of 50 $\mu m$ and a quality factor of 50.

Accordingly, each circular path on the oxide layer 2 passes the stationary observer 5000 times per second corresponding to 300'000 revolutions per minute (as compared to 3'600 revolutions of conventional disks), with a radius of 50 $\mu m$.

Of course, instead of the piezoceramic tube, other piezoelectric or magnetostrictive elements, like the tripods disclosed in IBM Technical Disclosure Bulletin Vol. 27, No. 10B, pp. 5976/7 and Vol. 27, No. 11, pp. 6373, respectively, may be used.

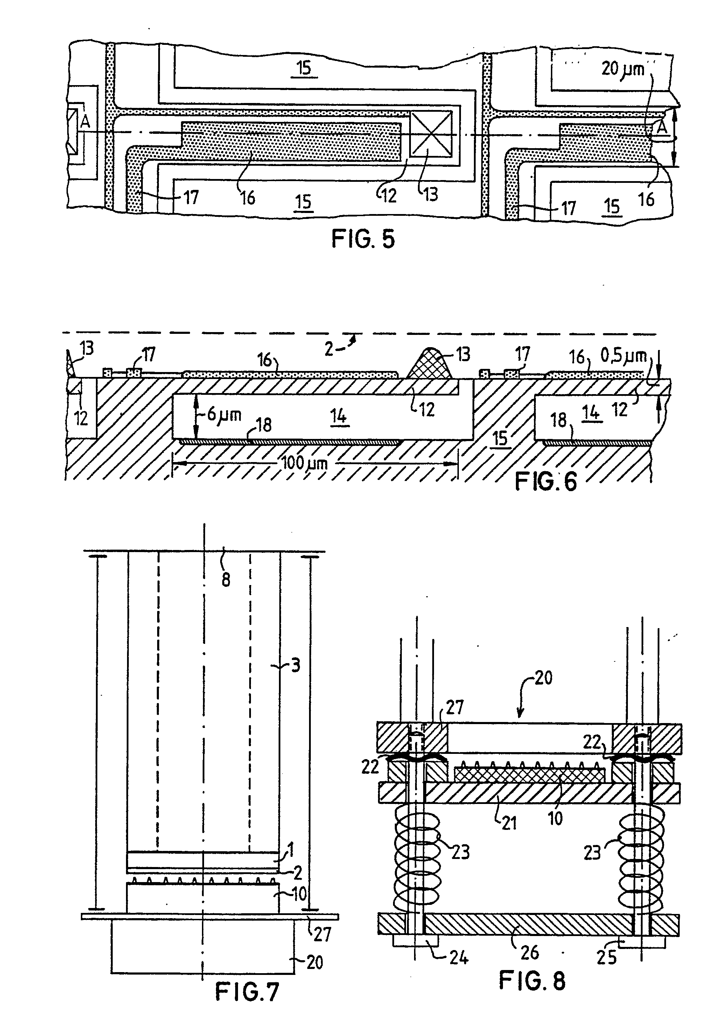

As mentioned before, silicon dioxide layer 2 is used as the storage medium, the information being stored in the form of trapped charges. These charges result from a bombardment of the particular storage locations with electrons generated at the transducer. Figs. 4 and 5 show a simplified, partial representation of the transducer array 10. Fig. 6 is a cross section of part of the transducer array along line A-A in Fig. 5. Each individual transducer 11 comprises a cantilever beam 12 bearing at its free end a tunnel tip 13. All cantilever beams 13 in the array extend across a cavity 14 machined into the substrate 15 on which array 10 is built. The manufacture of the cavities 14 and cantilever beams 12 on the substrate 15 - which preferably consists of silicon or gallium arsenide - follows known micromechanical techniques as described, e.g. by K.E. Petersen "Dynamic Micromechanics on Silicon: Techniques and Devices", IEEE Trans. El. Dev., Vol. ED25, No. 10, 1978, pp. 1241-1249, and in EP-A- (Appln. 85102554.4).

Each cantilever beam 12 can individually be operated to assume a position within tunneling distance above its associated storage area on the recording silicon dioxide layer 2 by means of electrostatical deflection. To this end, each cantilever beam 12 carries an electrode 16 which is connected to a conductor 17 arranged on substrate 15. A counterelectrode 18 is placed on the bottom of each cavity 14. Application of a potential at electrodes 16 and 18 causes cantilever beam 12 to deflect, thus varying the distance between tunnel tip 13 and the surface of recording layer 2.

The preferred specifications for cantilever beams 12 are:

| Material: | SiO$_2$ |
|---|---|
| Length: | 100 µm |
| Width: | 10...20 µm |
| Thickness: | 0,5 µm |
| Electrode spacing: | 6 µm |
| Operating voltage: | < 20 V |

With these parameters, cantilever beams 12 will have a bending resonance frequency of about 50 kHz and achieve a maximum deflection of 200 nm. Because of the monolithic nature of the transducer array 10 on its substrate 15, all tunnel tips 13 stay in a fixed distance relation determined during the manufacturing process.

As briefly mentioned above, the invention contemplates to employ the tunnel effect for information storage. Obviously, storage density is improved if the individual storage locations can be made smaller and if the physical means for writing/reading the information can be better focused or concentrated. These requirements call for a tight control of very small distances between transducer and recording surface. The tunneling technique in an ideal way permits to meet all those requirements.

Electron tunneling (and field emission) through vacuum or air (which at the distances in question is equivalent to a vacuum) is excellently suited to control distances in the 0,1...10 nm range (cf. G. Binnig, H. Rohrer, Ch. Gerber and E. Weibel, Appl. Phys. Lett. 40 (1982) 178). The control mechanism is based on the tunnel current which varies exponentially with the size of the gap between two conductors.

With a tunnel tip of reasonable sharpness having a radius of curvature of about 3 nm at the apex, for example, the tunnel current is laterally confined to an area of approximately 1 nm$^2$. Accordingly, the current density reaches very high values, such as e.g. 10$^3$ A/mm$^2$ for a tunnel current of 1 nA. In view of the good focusing of the electron beam passing from tip 13 to the surface of the recording layer 2, the bit size can be made to equal about 10 nm$^2$. With a maximum circular deflection of 50 µm of piezoceramic tube 2, the outer diameter of the annular storage area associated on layer 2 with each one of 400 tunnel tips 13 in the array 10 is, of course, 100 µm. With an inner diameter of 30 µm, the number of tracks per annulus 9 (Fig. 3) is 3000, the storage capacity per annulus hence being 100 Mbit, and the total amounting to 40 Gbit for a 400-tip storage unit.

A preferred embodiment of a storage medium/tunnel tip array assembly is schematically shown in Fig. 7. Its overall size is about 30×30×60 mm$^3$. Tunnel tip array 10 is mounted parallel to and facing storage layer 2 which is supported by substrate 1 at the free end of piezoceramic tube 3. The other end of tube 3 is rigidly fixed to frame 8. To be able to bring tunnel tip array 10 to within tunneling distance (i.e. ∿ 1 nm) from storage layer 2, array 10 is attached to a coarse-approach unit 20.

Fig. 8 depicts a simple embodiment for coarse-approach unit 20 comprising a tip array holder 21 mounted between sets of hard springs 22 and soft springs 23.

Screws 24 and 25 in combination with springs 22 and 23 and bottom plate 26 permit sufficiently fine motion for manual adjustment of tip array 10 with respect to layer 2. An annular plate receives screws 24 and 25 and provides a mounting base for frame 8.

When the coarse-approach has been completed manually, each cantilever beam 12 adjusts the distance of its associated tunnel tip 13 from the surface of storage layer 2 individually . This adjustment is accomplished by energizing electrodes 16 and 18 such that the cantilever beam 12 involved is bent electrostatically and tunnel tip 13 retracted from, or approached to, the storage layer 2. The control circuitry necessary for this adjustment may be integrated on tunnel tip array 10. The distance is not adjusted for each storage location but may be averaged over a tenth of a storage annulus 9, corresponding to about 60 µm or 6000 bit. On such small lateral distances, variations in surface height of the storage layer 2 are negligible.

With the fine adjustment of the tunnel tips 13 in respect of the surface of the storage medium completed, information can be written on the area of a storage annulus by appropriate variation of the tunneling current. In one embodiment of the invention, charges are trapped on the silicon dioxide layer 2 by applying a voltage pulse of appropriate amplitude, in another embodiment a bit of stored information is represented by a chemical modification of the storage medium through carbonization of hydrocarbons at its surface.

Bytes, words, lines, etc. can be written in parallel on a plurality of storage annuli 19 because of the fixed-distance relationship of both, the tunnel tip array 10 and the corresponding array of annuli 19. As in conventional direct access storage apparatus, certain storage annuli may be reserved for addressing purposes to facilitate guiding the array of tunnel tips safely to a certain address in spite of the extreme smallness of the storage unit in accordance with the invention.

Stored information is represented by a variation of the tunneling current owing the corresponding changes of the workfunction at the respective storage location. Electronic circuitry required for processing the write/read signals can be integrated on the chip carrying the tunnel tip array to avoid undesired increases of the cycle time.

As is obvious to those skilled in the art, effects of temperature drift can be kept sufficiently small by appropriate stabilization, e.g. in a cryogenic environment. Also, it might be advantageous to contain the entire storage unit under vacuum or in an atmosphere of inert gas.

## Claims

1. Direct access storage unit comprising a storage medium (2), at least one tunneling current detector (10, 11) including a pointed tip (13) facing said storage medium (2) and being attached to a cantilever beam (12), allowing the mutual distance between said tip (13) and the surface of said storage medium (2) to be adjustable in the nanometer range, the writing and/or reading of digital information into, or out of the storage medium (2) being performed by means of variation of the tunneling current flowing across the gap between said tip (13) and the surface of said storage medium (2), and means for generating a mutual displacement between said storage medium (2) and said tunneling current detector (10, 11), **characterized** in that said storage medium (2) is attached to the free end of an elongate, two-dimensional positioning device which is rigidly anchored at its other end, and which comprises at least one piezoelectric bender element (3) carrying several pairs of electrodes (4, 6; 5, 7) on orthogonal areas of the surface of said bender element (3), and electronic control circuitry for energizing said electrodes (4...7) in such a fashion that the free end of the bender element (3) performs a circular motion to enable each tunnel tip (13) to scan its associated storage area along the periphery of a circle.

2. Storage unit in accordance with claim 1, **characterized** in that said tunneling current detectors (10, 11) are arranged in an array (10) with all cantilever beams (12) extending from a common substrate (15) such that all of the tunnel tips (13) simultaneously scan their associated storage areas along circles when the electrodes (4...7) of said positioning device (2) are energized.

3. Storage unit in accordance with claim 1, **characterized** in that the piezoelectric bender element (3) consists of a piezoceramic tube carrying on its cylindrical outer surface four electrodes (4...7) each covering essentially one quarter of the tube's surface.

4. Storage unit in accordance with claim 1, **characterized** in that said electronic control circuitry is designed so as to energize said electrodes (4...7) in a repetitive sequence.

5. Storage unit in accordance with claim 1, **characterized** in that said electronic control circuitry is designed so as to simultaneously energize alternate pairs of electrodes (4 and 6; 5 and 7) arranged on opposite surface areas of said piezoelectric bender element (3), the two electrodes of each pair (4 and 6; 5 and 7) receiving voltages with opposite polarity, respectively.

6. Storage unit in accordance with claim 1, **characterized** in that the piezoelectric bender element (3) consists of a piezoceramic tripod with each leg thereof being anchored at one end, and with the other ends thereof connected in a joint, each leg carrying at least one electrode, and the electrodes being energizable in such a fashion that the joint of the tripod performs a circular motion, said joint carrying said storage medium (2).

7. Storage unit in accordance with claim 1, **characterized** in that each of the cantilever beams (12) is machined from a common substrate (15) and extends across a cavity (14) the bottom of which is at least partly covered with an electrically conductive layer (18), that each cantilever beam (12) also carries an electrically conductive layer (16), said two layers (16, 18) permitting electrostatic deflection of each cantilever beam (12) so as to individually adjust the distance between the associated tunnel tip (13) and the surface of the storage medium (2).

**Revendications**

1. Unité de mémoire à accès direct comprenant un support d'enregistrement (2), au moins un détecteur de courant d'effet tunnel (10,11) comportant un élément pointu (13) placé en face dudit support d'enregistrement (2) et fixé à une poutre en porte-à-faux (12), permettant de régler la distance mutuelle entre ladite pointe (13) et la surface dudit support d'enregistrement (2) dans l'ordre de grandeur du nanomètre, l'écriture et/ou la lecture d'informations numériques sur ou à partir du support d'enregistrement (2) étant effectuées au moyen de la variation du courant d'effet tunnel qui circule à travers l'intervalle entre ladite pointe (13) et la surface dudit support d'enregistrement (2), et des moyens pour engendrer un déplacement mutuel entre ledit support d'enregistrement (2) et ledit détecteur de courant d'effet tunnel (10,11), caractérisée en ce que ledit support d'enregistrement (2) est fixé à l'extrémité libre d'un dispositif de positionnement bidimensionnel allongé qui est rigidement ancré à son autre extrémité, et qui comprend au moins un élément flexible piézoélectrique (3) portant plusieurs paires d'électrodes (4,6;5,7) sur des régions orthogonales de la surface du dit élément flexible (3), et un circuit de commande électronique pour exciter lesdites électrodes (4,... 7) d'une manière telle que l'extrémité libre de l'élément flexible (3) effectue un mouvement circulaire pour permettre à chaque pointe d'effet tunnel (13) de balayer sa zone de stockage associée le long de la périphérie d'un cercle.

2. Unité de mémoire suivant la revendication 1, caractérisée en ce que lesdits détecteurs de courant d'effet tunnel (10,11) sont agencés en un ensemble (10) et toutes les poutres en porte-à-faux (12) s'étendent à partir d'un substrat commun (15), de sorte que toutes les pointes d'effet tunnel (13) balaient simultanément leurs zones de stockage associées le long de cercles lorsque les électrodes (4,... 7) dudit dispositif de positionnement (2) sont excitées.

3. Unité de mémoire suivant la revendication 1, caractérisée en ce que l'élément flexible piézoélectrique (3) consiste en un tube piézocéramique portant sur sa surface extérieure cylindrique quatre électrodes (4 ... 7) recouvrant chacune sensiblement un quart de la surface du tube.

4. Unité de mémoire suivant la revendication 1, caractérisée en ce que ledit circuit de commande électronique est conçu de façon à exciter lesdites électrodes (4 ... 7) en une séquence répétitive.

5. Unité de mémoire suivant la revendication 1, caractérisée en ce que ledit circuit de commande électronique est conçu de façon à exciter simultanément des paires alternées d'électrodes (4 et 6 ; 5 et 7) disposées sur des surfaces opposées dudit élément flexible piézoélectrique (3), les deux électrodes de chaque paire (4 et 6 ; 5 et 7) recevant des tensions de polarité opposée, respectivement.

6. Unité de mémoire suivant la revendication 1, caractérisée en ce que l'élément flexible piézoélectrique (3) consiste en un tripode piézocéramique dont chaque pied est ancré à une extrémité et dont les autres extrémités sont reliées en un joint, chaque pied portant au moins une électrode et les électrodes pouvant être excitées d'une manière telle que le joint du tripode effectue un mouvement circulaire, ledit joint portant ledit support d' enregistrement (2).

7. Unité de mémoire suivant la revendication 1, caractérisée en ce que chacune des poutres en porte-à-faux (12) est usinée à partir d'un substrat commun (15) et s'étend sur une cavité (14) dont le fond est au moins partiellement recouvert d'une couche électriquement conductrice (18), et en ce que chaque poutre en porte-a-faux (12) porte également une couche électriquement conductrice (16), lesdites deux couches (16, 18) permettant une flexion électrostatique de chaque poutre en porte-à-faux (12) de façon à ajuster individuellement la distance entre la pointe d'effet tunnel associée (13) et la surface du support d'enregistrement (2).

**Ansprüche**

1. Speichereinheit mit direktem Zugriff, die aufweist: ein Speichermedium (2), mindestens einen Tunnelstrom-Detektor (10, 11) mit einer zugespitzten Spitze (13), die dem Speichermedium (2) gegenüberliegt und an einem freitragenden Träger (12) angebracht ist, wodurch es möglich ist, den gegenseitigen Abstand zwischen der Spitze (13) und der Oberfläche des Speichermediums (2) im Nanometer-Bereich einzustellen, wobei die digitale Schreib- und/oder Lese-Information in das oder aus dem Speichermedium (2) mittels einer Änderung des Tunnelstromes erfolgt, der über den Zwischenraum zwischen der Spitze (13) und der Oberfläche des Speichermediums (2) fließt, und Mittel zum Erzeugen einer gegenseitigen Verschiebung zwischen dem Speichermedium (2) und dem Tunnelstrom-Detektor (10, 11), *dadurch gekennzeichnet*, daß das Speichermedium (2) am freien Ende einer länglichen, zweidimensionalen Einstellvorrichtung angebracht ist, die an ihrem andern Ende starr verankert ist, und die mindestens ein piezoelektrisches Biegeelement (3) aufweist, das mehrere Paare von Elektroden (4, 6; 5, 7) auf orthogonalen Bereichen seiner Oberfläche trägt, und eine elektronische Steuerschaltung zum Erregen der Elektroden (4, 6; 5, 7) derart, daß das freie Ende des Biegeelementes (3) eine kreisförmige Bewegung ausführt, um den Tunnelspitzen (13) zu ermöglichen, den ihnen zugeordneten Speicherbereich entlang des Umfangs eines Kreises abzutasten.

2. Speichereinheit nach Anspruch 1, *dadurch gekennzeichnet*, daß die Tunnelstrom-Detektoren (10, 11) in einer Ordnung (10) angeordnet sind, bei der alle freitragenden Träger (12) sich aus einem gemeinsamen Substrat (15) so erstrecken, daß alle Tunnelspitzen (13) ihre zugeordneten Speicherbereiche entlang von Kreisen gleichmäßig abtasten, wenn die Elektroden (4…7) der Einstellvorrichtung (2) erregt sind.

3. Speichereinheit nach Anspruch 1, *dadurch gekennzeichnet*, daß das piezoelektrische Biegeelement (3) aus einer piezoelektrischen Röhre besteht, die auf ihrer zylindrischen äußeren Oberfläche vier Elektroden (4…7) trägt, von denen jede im wesentlichen ein Viertel der Oberfläche überdeckt.

4. Speichereinheit nach Anspruch 1, *dadurch gekennzeichnet*, daß die elektronische Steuerschaltung so ausgelegt ist, daß die Elektroden (4…7) in einer sich wiederholenden Folge erregt werden.

5. Speichereinheit nach Anspruch 1, *dadurch gekennzeichnet*, daß die elektronische Steuerschaltung so ausgelegt ist, daß die abwechselnden Paare von Elektroden (4 und 6; 5 und 7) die in gegenüberliegenden Oberflächenbereichen des piezoelektrischen Biegeelementes (3) angeordnet sind, gleichzeitig erregt werden, wobei zwei Elektroden jedes Paares (4 und 6; 5 und 7) Spannungen entgegengesetzter Polarität erhalten.

6. Speichereinheit nach Anspruch 1, *dadurch gekennzeichnet*, daß das piezoelektrische Biegeelement (3) aus einer piezokeramischen Dreibein besteht, bei dem jedes Bein an einem Ende verankert ist und die andern Enden in einem Gelenk verbunden sind, wobei jedes Bein mindestens eine Elektrode trägt und die Elektroden derart erregt werden können, daß das Gelenk des Dreibeins eine kreisförmige Bewegung ausführt, wobei das Gelenk das Speichermedium (2) trägt.

7. Speichereinheit nach Anspruch 1, *dadurch gekennzeichnet*, daß die freitragenden Träger (12) aus einem gemeinsamen Substrat (15) hergestellt sind und sich über eine Hohlraum (14) erstrecken, dessen Boden mindestens teilweise von einer elektrisch leitenden Schicht (18) bedeckt ist, daß jeder freitragende Träger (12) ebenfalls eine elektrisch leitende Schicht (16) trägt, wobei die beiden Schichten (16, 18) eine elektrostatische Ablenkung jedes der freitragenden Träger (12) ermöglichen, um den Abstand zwischen der zugeordneten Tunnelspitze (13) und der Oberfläche des Speichermediums (2) individuell einzustellen.

FIG.1

FIG. 2

FIG.3

FIG.4

FIG. 5

FIG. 6

FIG.7

FIG. 8